# EUROPÄISCHE PATENTSCHRIFT

(11) **EP 2 494 125 B1**
(45) Veröffentlichungstag und Bekanntmachung des Hinweises auf die Patenterteilung: **05.03.2014**
(21) Anmeldenummer: 10761004.0
(22) Anmeldetag: 04.10.2010
(51) Int. Cl.: E04F 13/04, E04F 13/08, E04B 1/76, F16B 5/06, F16B 13/00, F16B 13/04, F16B 13/12

(54) **PUTZSYSTEM**
PLASTERING SYSTEM
SYSTÈME D'ENDUIT

(30) Priorität: 28.10.2009 DE 102009044352
(43) Veröffentlichungstag der Anmeldung: 05.09.2012
(73) Patentinhaber: SFS Intec Holding AG, 9435 Heerbrugg (CH)
(72) Erfinder: KORHONEN, Tero, S-73494 Strömsholm (SE)
(86) Internationale Anmeldenummer: PCT/EP2010/064703
(87) Internationale Veröffentlichungsnummer: WO 2011/051080

(56) Entgegenhaltungen:
- EP-A1- 2 096 229
- EP-A2- 0 270 511
- DE-A1- 10 159 632
- DE-A1-102008 048 705
- DE-C- 641 489
- DE-U1- 8 112 335
- DE-U1- 8 212 983
- GB-A- 1 439 590
- GB-A- 1 538 506
- US-A- 1 993 432

## Beschreibung

Die Erfindung bezieht sich auf ein Putzsystem für eine Fassade eines Gebäudes, mit einem Stahlnetz zum Verstärken einer Putzschicht und mit Befestigungsmitteln zum Befestigen des Stahlnetzes an der Fassade, wobei die Befestigungsmittel einen an der Unterseite einer Dachkonstruktion und/oder auf der oberen Seite einer Wand der Gebäudekonstruktion zu befestigenden, kammförmigen Befestiger zum Fixieren des Stahlnetzes vor der Wand_in einer hängenden Position umfassen.

Es ist bekannt, eine Putzschicht an einer Fassade eines Gebäudes mit Hilfe eines verstärkenden Stahlnetzes und unter Verwendung von Befestigungsmitteln zum Befestigen des Stahlnetzes an der Fassade zu fixieren. Heutige Lösungen zum Fixieren des Stahlnetzes bestehen darin, dass das Netz nur an dem Kopf von Befestigern fixiert wird. An einer Putzfassade gibt es jedoch eine laterale Belastung von der Putzschicht her von ungefähr 50 kg/m². Das Stahlnetz, das für heutige Lösungen benutzt wird, ist ein ebenes Stahlnetz. Probleme ergeben sich, wenn das Stahlnetz so dicht bei dem Substrat (der Isolation oder der Wand der Gebäudekonstruktion) ist, dass das Stahlnetz nicht in der Lage ist, die Putzschicht so sicher wie nötig zu verstärken. In existierenden Lösungen, bei denen mit einem ebenen Stahlnetz gearbeitet wird, werden etwa 15-25 Distanz erbringende Netzbefestiger / m² eingesetzt, um die benötigte Distanz zu erzeugen. Trotzdem gibt es oft ein Problem mit Fassaden, die einige Zentimeter nach unten gleiten. Das verursacht Probleme durch Rissbildungen und Durchbiegungen in der Putzschicht. Das bedeutet, dass der Befestiger, der bei heutigen Lösungen benutzt wird, starr sein muss, um in der Lage zu sein, die vertikalen Lasten zu tragen. Das macht die Befestiger teuer. Die laterale Kraft kann so hoch sein, dass sie bewirkt, dass sich die gesamte Putzschicht nach unten verschiebt, was an der Fassade Probleme erzeugt.

Bei existierenden Lösungen muss der Kunststoffdübel, der zum Befestigen der Isolation benutzt wird, zusammen mit dem Befestiger, welcher das Stahlnetz an dem Kopf des Dübels hält, die lateralen und horizontalen Kräfte aushalten. Mit anderen Worten, das Stahlnetz hängt frei an den Kunststoffdübeln und ist nicht direkt an dem Substrat befestigt, um die lateralen Kräfte aufzunehmen.

Wenn eine Isolation mit geringer Dichte verwendet wird, ist das eine Lösung. Existierende Lösungen dafür existieren aber nicht wirklich, weil das Befestigungssystem darauf basiert, dass auf die Isolation Druck mit den Dübeln ausgeübt wird, welche Reibung an der Isolation erzeugen, um die lateralen Kräfte aufzunehmen. Eine Isolation geringer Dichte wird jedoch einfach bis zu dem Grad zusammengedrückt, dass es unmöglich ist, Putz auf sie aufzutragen.

Darüber hinaus ist die Befestigungszeit, die benötigt wird, um das Stahlnetz mit seinen Befestigern an dem Substrat zu befestigen, lang.

Ein Putzsystem der eingangs genannten Art gemäß dem Oberbegriff des Anspruchs 1 ist aus dem Dokument GB 1 439 590 A bekannt. In diesem Dokument findet sich ein Hinweis, dass ein Stahlnetz eines Putzsystems auch an einer Wand installiert werden kann (siehe S.1, Z. 24 - 27). Auf Grund der Lehre aus Abb. 2 dieses Dokuments ist es vorstellbar, auch an einer Wand einen kammförmigen Befestiger auf der oberen Seite der Wand zu befestigen.

Aus dem Dokument GB 1 538 506 A ist ein Putzsystem bekannt, das ebenso wie ein aus dem Dokument US 1 993 432 A bekanntes Putzsystem zum Fixieren des Stahlnetzes an der Fassade leiterförmige Befestigungsmittel aufweist, die üblicherweise vertikal eingesetzt werden. Nach dem vorgenannten Dokument US 1 993 432 A ist aber auch eine horizontale Montage möglich, wie es dort z.B. in Fig. 1 unten gezeigt ist. Das Dokument DE 641 489 C zeigt Flacheisenanker zum Aufhängen des Netzes.

Ein durch die vorliegende Erfindung zu lösendes Problem besteht darin, ein Putzsystem zu schaffen, welches ein Nach-unten-gleiten der Fassade eines Gebäudes einfach und sicher verhindert und erlaubt, die Befestigungssystemkosten zu senken und die Montagezeit zu reduzieren.

Gemäß der vorliegenden Erfindung ist ein Putzsystem der eingangs genannten Art gekennzeichnet durch mehrere Kunststoffdübel- und Metallschraube-Baugruppen, die jeweils einen Kunststoffdübel mit einem Kopf und eine Metallschraube zum Befestigen einer Isolation an der Wand der Gebäudekonstruktion umfassen, wobei der Dübel Ausschnitte hat, so daß der Dübel in der Länge einstellbar ist, und durch Kunststoffschrauben zum Befestigen des Stahinetzes an dem Kopf des Kunststoffdübels und/oder an einer eine hohe Dichte aufweisenden Isolation.

Bei dem Putzsystem nach der vorliegenden Erfindung wird das Stahlnetz an der Gebäudekonstruktion direkt befestigt, d.h. an der Wand oder an dem Dach des Gebäudes. Dadurch kann eine gleitende Putzschicht vermieden werden. Das bedeutet auch, dass der Befestiger nicht so starr zu sein braucht wie bei den bekannten Lösungen, weil die vertikale Last minimiert wird, was den Befestiger auch billiger macht. Das Putzsystem nach der vorliegenden Erfindung nimmt laterale Kräfte mit dem Stahlnetz selbst auf. Bei dem Putzsystem nach der vorliegenden Erfindung machen es die Befestigungsmittel für das Stahlnetz möglich, das Stahlnetz am Dachstuhl, an den Wänden oder am Dachfuß zu befestigen. Es ist das Stahlnetz selbst, welches die lateralen Kräfte daran hindert, die gesamte Putzschicht nach unten zu verschieben. Der kammförmige Befestiger aus Stahl erlaubt, das Stahlnetz an dem Substrat (d. h. an der Wand oder dem Dach des Gebäudes) sehr schnell und einfach zu fixieren.

Bei der neuen Befestigungslösung, wo das Stahlnetz an der Wand oder an dem Dach befestigt wird, kann eine sich verschiebende Putzschicht vermieden werden. Das bedeutet auch, dass der Befestiger nicht so starr zu sein braucht wie bei heutigen Lösungen, weil die vertikale Last minimiert wird, was den Befestiger auch billiger macht.

Bei dem Putzsystem nach der vorliegenden Erfindung kann mit den Ausschnitten die Kunststoffdübel-Metallschraube-Baugruppe in der Länge eingestellt werden. Je länger die Ausschnitte sind, umso größer ist die einstellbare Länge. Wenn die Wand rau und uneben ist, kann die Lage der Isolation mit dem einstellbaren Dübel justiert werden, so dass es möglich ist, die Rauigkeit auszugleichen und glattere Isolations- und Putzschichten zu erzielen.

Der bei dem Putzsystem nach der Erfindung eingesetzte Befestiger erlaubt, das Stahlnetz an einer Isolation hoher Dichte, die schwierig zu durchdringen ist, zu befestigen. Neue Typen von Isolation hoher Dichte, die jetzt auf den Markt erscheinen, werden diesen Typ von Befestiger benötigen, um die Isolation zu durchdringen und das Stahlnetz eng an der Isolation zu halten.

Bei dem Putzsystem nach der vorliegenden Erfindung können die Kunststoffschrauben benutzt werden, um das Stahlnetz an dem Kopf des Kunststoffdübels zu befestigen, der benutzt wird, um die Isolation an der Wandkonstruktion zu befestigen. Diese Lösung zum Befestigen des Stahlnetzes an dem Kopf des Dübels hat hohe Auszugswerte und einen hohen Scherbruchwiderstand. Das führt zur Aufnahme der lateralen Kräfte aufgrund des Eigengewichtes des Putzes und auch zur Aufnahme der horizontalen Kräfte aufgrund von Windbelastungen, die bestrebt sind, das Stahlnetz von dem Dübel wegzuziehen. Ein weiterer Vorteil besteht darin, dass dieselbe Kunststoffschraube für zwei verschiedene Anwendungen benutzt werden kann, wodurch sich die Formwerkzeugkosten und auch die Menge an unterschiedlichen Produkten auf der Baustelle reduzieren lassen. Der Vorteil ist, dass die lateralen Kräfte mit dem Stahlnetz selbst und mit der dafür vorgesehenen Befestigungslösung, wie sie durch die vorliegende Erfindung geschaffen wird, aufgenommen werden.

Weitere Ausgestaltungen der vorliegenden Erfindung bilden den Gegenstand der abhängigen Ansprüche.

In einer Ausgestaltung der vorliegenden Erfindung ist das Stahlnetz so modifiziert (gegenüber einer planaren Konfiguration), dass es abgewinkelte Teile aufweist, die eine Distanz zwischen dem Stahlnetz und einer die Putzschicht tragenden Isolation erzeugen. Das modifizierte Stahlnetz erzeugt eine Distanz zur Isolation, so dass das modifizierte Stahlnetz in der Mitte der Putzschicht angeordnet werden kann. Der Vorteil davon ist, dass das modifizierte Stahlnetz die Putzschicht viel besser verstärkt als ein ebenes Stahlnetz. Diese Verstärkung verhindert Rissbildungen und Durchbiegungen in der Putzschicht. Mit Hilfe des modifizierten Stahlnetzes ist das Putzsystem in der Lage, laterale Kräfte mit dem Stahlnetz selbst aufzunehmen. Das Stahlnetz sorgt für eine gewünschte Distanz zur Isolation. Das Stahlnetz, das eine Verstärkung in der Mitte der Putzschicht bildet, sorgt für mehr Widerstand gegen Risse und Durchbiegungen in der Putzschicht.

In einer weiteren Ausgestaltung der vorliegenden Erfindung können die Ausschnitte des Dübels für unterschiedliche Bereichslösungen unterschiedliche Längen haben. Dadurch ist der Befestiger für ein exakteres Fixieren in unebenen Bereichen einstellbar. Der Ausschnitt in dem Befestiger, der das Einstellen der Länge ermöglicht, kann für unterschiedliche Bereichslösungen unterschiedliche Längen haben.

In einer weiteren Ausführungsform der vorliegenden Erfindung hat der Kopf des Dübels Frässchneiden, die so angeordnet sind, dass der Dübel in der Lage ist, sich selbst zu versenken, wenn er gedreht wird. Darüber hinaus kann der Kopf des Dübels Schneidflanken oder seitliche Messer haben, die den Schneidbereich rund machen. Bei dünnen Putzsystemen ist es oft erforderlich, den Befestiger zusammen mit seinem Kopf in die Isolation zu versenken. Der Grund dafür ist, dass der Kopf des Dübels sonst als eine Beule in der Fassade, die glatt sein muss, sichtbar sein kann. Kunden verlangen häufig einen versenkten Befestiger, um zu vermeiden, dass der Befestiger aus einer Putzschicht hervortritt. In der vorgenannten Ausgestaltung der Erfindung kann sich der Dübel selbst versenken, indem er selbst als ein Fräswerkzeug wirkt.

Bevorzugte Ausführungsformen der vorliegenden Erfindung werden im Folgenden unter Bezugnahme auf die beigefügten Zeichnungen beschrieben, in denen
- die Fig. 1 und 2: in zwei verschiedenen Ansichten das Prinzip eines Putzsystems nach der vorliegenden Erfindung veranschaulichen,
- Fig. 3: eine auseinander gezogene Darstellung des Systems nach den Fig. 1 und 2 ist, wobei Fig. 3a einen kammförmigen Befestiger zusammen mit einem Stahlnetz zeigt, Fig. 3b in Draufsicht den kammförmigen Befestiger zeigt und Fig. 3c eine Seitenansicht des Stahlnetzes ist,
- Fig. 4: ein Putzsystem nach der vorliegenden Erfindung mit einem modifizierten Stahlnetz veranschaulicht, wobei Fig. 4a eine Draufsicht auf das modifizierte Stahlnetz ist, Fig. 3b eine Draufsicht auf einen kammförmigen Befestiger ist, Fig. 3c eine Seitenansicht des Stahlnetzes ist und Fig. 4d eine Vorderansicht des modifizierten Stahlnetzes ist,
- Fig. 5: veranschaulicht, wie ein modifiziertes Putzstahlnetz eine Distanz zu einer darunter gelegenen Isolation erbringt,
- Fig. 6: eine Seitenansicht einer KunststoffdübelMetallschraube-Baugruppe des Putzsystems nach der vorliegenden Erfindung ist,
- Fig. 7: eine Seitenansicht einer KunststoffdübelMetallschraube-Baugruppen des Putzsystems nach der vorliegenden Erfindung ist, die einen weiteren Typ von Kunststoffdübel umfasst,
- Fig. 8: die Baugruppe nach Fig. 6 veranschaulicht, wobei aber der Dübel zusammengedrückt und in der Länge eingestellt ist,
- Fig. 9: die Baugruppe nach Fig. 7 veranschaulicht, wobei aber der Dübel zusammengedrückt und in der Länge eingestellt ist,
- Fig. 10: eine Seitenansicht eines Dübels des Putzsystems nach der vorliegenden Erfindung ist,
- Fig. 11: eine Draufsicht auf den Dübel nach Fig. 10 ist,
- Fig. 12: eine weitere Seitenansicht des Dübels nach Fig. 10 ist,
- Fig. 13: ein Dübel wie in den Fig. 10-12 ist, wobei aber Löcher in dem Kopf des Dübels gezeigt und seitliche Messer an der Unterseite desselben vorgesehen sind, wobei Frässchneiden der Übersichtlichkeit halber weggelassen worden sind,
- Fig. 14: eine Seitenansicht einer Kunststoffschraube ist, welche ein Teil des Putzsystems nach der vorliegenden Erfindung ist,
- Fig. 15: eine Draufsicht auf die Kunststoffschraube nach Fig. 14 ist und
- Fig. 16: eine weitere Seitenansicht der Kunststoffdübel-Metallschraube-Baugruppe des Putzsystems nach der vorliegenden Erfindung ist, wobei Frässchneiden der Übersichtlichkeit halber wieder weggelassen worden sind.

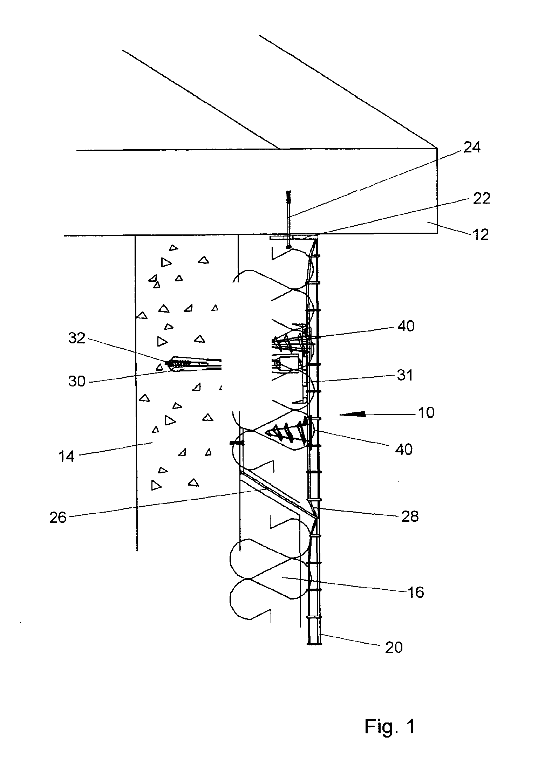

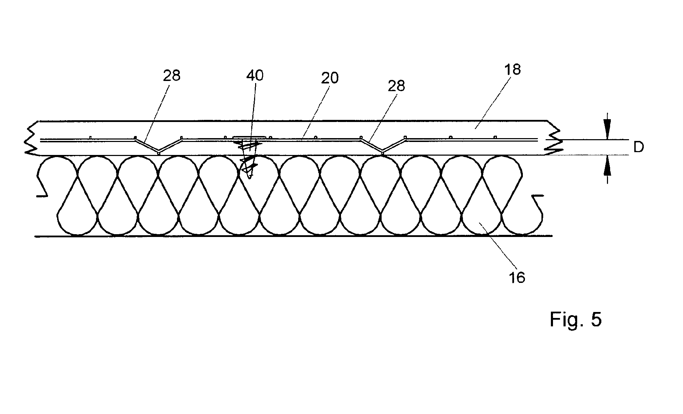

Die Fig. 1 bis 5 zeigen die Lösung nach der vorliegenden Erfindung zum Fixieren eines Putzstahlnetzes 20 an einer Fassade. Fig. 1 veranschaulicht das Prinzip eines Putzsystems, das insgesamt mit der Bezugszahl 10 bezeichnet ist, für eine Fassade einer Gebäudekonstruktion. Die Gebäudekonstruktion ist durch eine Dachkonstruktion 12 und eine vertikale Wand 14, welche aus Backstein oder Beton besteht, gezeigt. Die Außenseite der Wand 14 ist mit einer Isolation 16 von hoher Dichte bedeckt. Die Außenseite der Isolation 16 ist mit einer Putzschicht 18 (nur in Fig. 5 gezeigt) zu überziehen. Die Putzschicht 18 wird an der Isolation 16 mit Hilfe des Stahlnetzes 20 fixiert. Das Stahlnetz 20 positioniert und verstärkt die Putzschicht 18. Befestigungsmittel werden benutzt, um das Stahlnetz 20 an der Fassade oder der Außenseite der Wand 14 zu befestigen. Die Befestigungsmittel umfassen einen kammförmigen Befestiger 22 zum Fixieren des Stahlnetzes 20 in einer hängenden Position an der Gebäudekonstruktion. Der kammförmige Befestiger kann an der Unterseite der Dachkonstruktion 12 befestigt werden, wie es in Fig. 1 gezeigt ist, und/oder auf der oberen Seite einer Wand (nicht dargestellt) durch schraubenartige Befestiger 24, wie es in den Fig. 1-3 gezeigt ist. Zusätzlich dazu ist das Stahlnetz 20 an der Außenseite der Wand durch schräge Streben 26 fixiert, welche sich durch die Isolation 16 erstrecken und an der Außenseite der Wand 14 einerseits fixiert sind und an der Unterseite des Stahlnetzes 20 andererseits tragen, wie es in Fig. 1 dargestellt ist. Die Streben 26 können weggelassen werden, wenn die Dichte der Isolation 16 ausreichend ist, so dass die Isolation 16 das Stahlnetz 20 ohne die Abstützung durch die Streben 26 tragen kann.

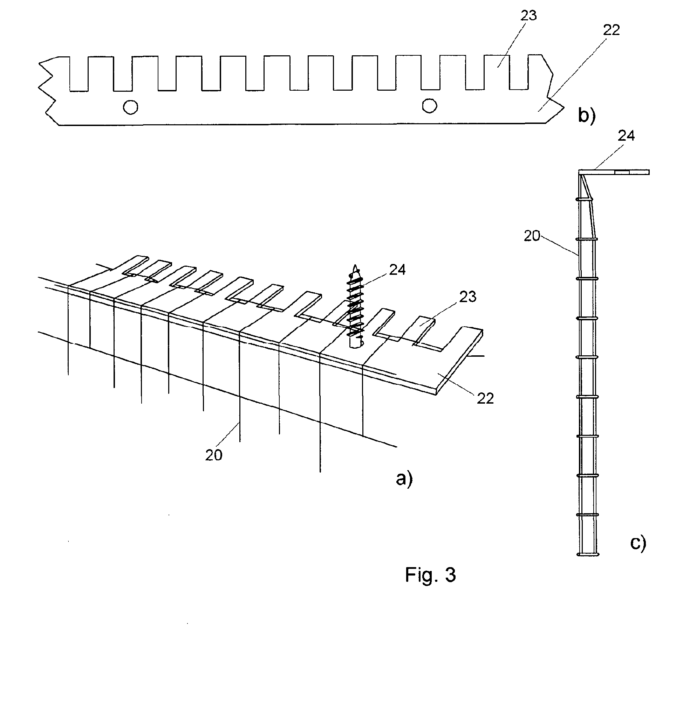

Fig. 3 zeigt den kammförmigen Befestiger 22 mehr ins Einzelne gehend. Eine Stahlplatte ist in Form eines Kammes ausgestanzt zum Befestigen des Putzstahlnetzes 20 an der Dachkonstruktion 12 und/oder der Wand 14, um laterale und Ausziehkräfte aufzunehmen.

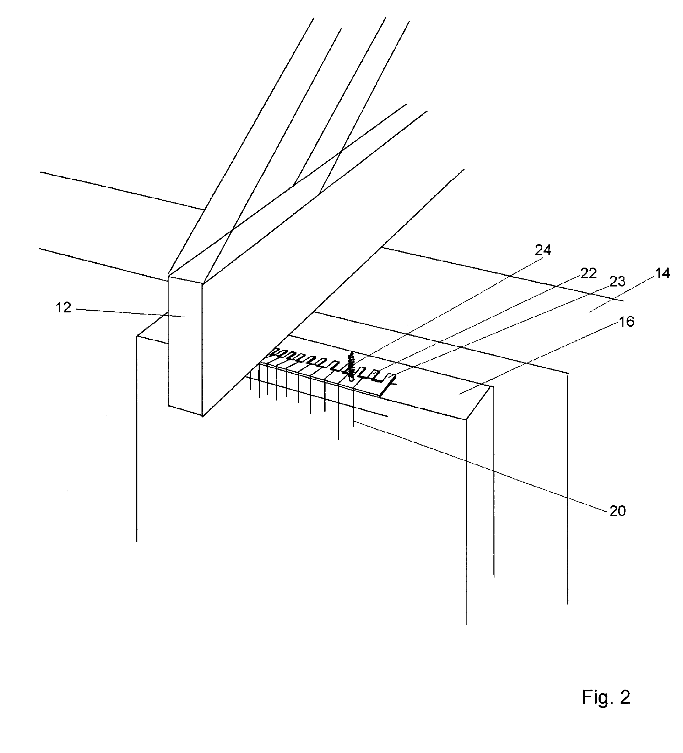

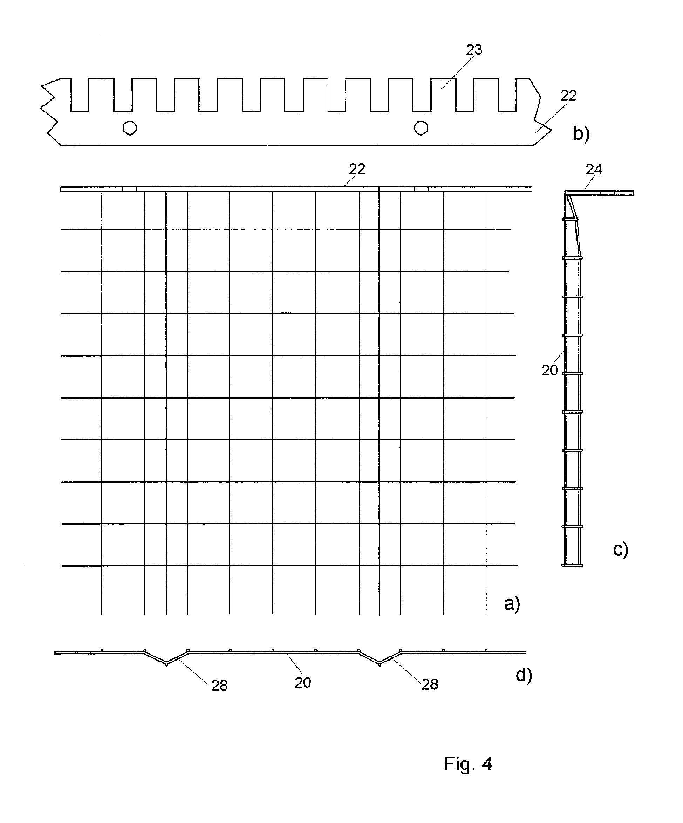

Fig. 4 zeigt ein Stahlnetz 20, das (gegenüber einer planaren Konfiguration) modifiziert ist, so dass es abgewinkelte Teile 28 aufweist. Dieses modifizierte Putzstahlnetz 20 hat eine feste Distanz D zu der Isolation 16, so dass die Verstärkung der Putzschicht 18 in der Mitte der Putzschicht platziert ist, wie es in Fig. 5 gezeigt ist. Das Stahlnetz 20 wird durch den kammförmigen Befestiger 22 erfasst, wie es in Fig. 2 und in Fig. 3a gezeigt ist, wobei Zinken 23 in eine äußere Zeile von Maschen des Stahlnetzes 20 eingreifen.

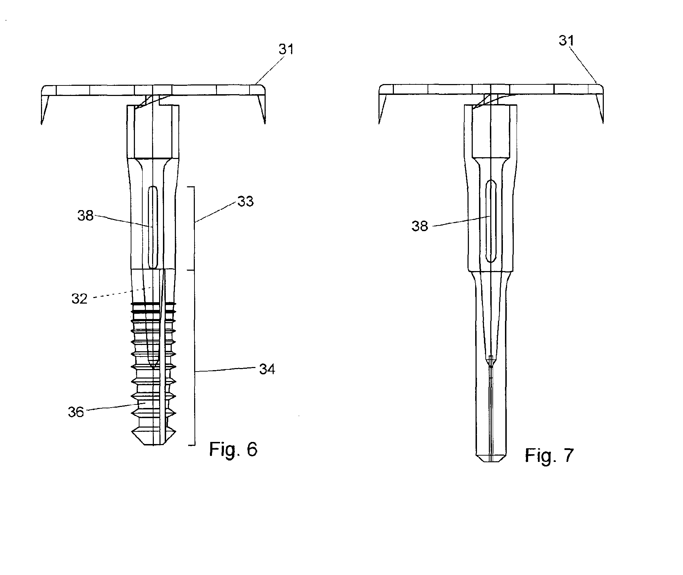

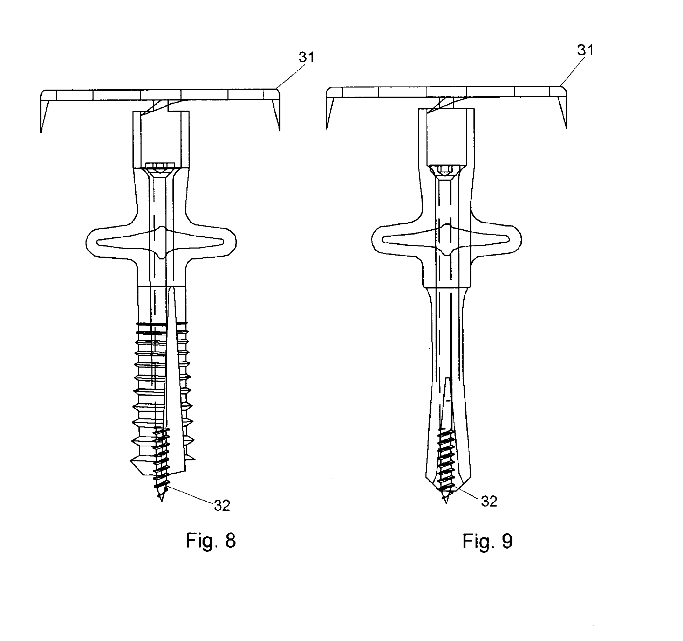

Gemäß der Darstellung in Fig. 1 umfassen die Befestigungsmittel weiter eine Vielzahl von Kunststoffdübeln 30, die jeweils einen Kopf 31 und eine Metallschraube 32 haben, zum Befestigen der Isolation 16 an der Wand 14 der Gebäudekonstruktion, wie es in Fig. 1 gezeigt ist. Beispiele der Kunststoffdübel 30 und der Metallschrauben 32 sind mehr ins Einzelne gehend in den Fig. 6-13 gezeigt. Gemäß den Fig. 6-9 hat jeder Dübel 30 einen Kopf 31, einen Kompressionsbereich 33 zum Einstellen der Dübellänge und einen Expansionsbereich 34 zum Fixieren des Dübels 30 in einem Loch in der Wand 14 mit Hilfe der Metallschraube 32. Der untere Teil des Dübels 30 kann Rillen 36 aufweisen, wie es in den Fig. 6 und 8 gezeigt ist, um das Fixieren in der Wand 14 zu verbessern, oder kann eine glatte Außenseite haben, wie es in den Fig. 7 und 9 gezeigt ist. Der Dübel 30 hat Ausschnitte 38, so dass der Dübel 30 durch entsprechendes Setzen der Metallschraube 32 in der Länge einstellbar ist, wie es in den Fig. 8 und 9 gezeigt ist, wo der Dübel 30 komprimiert und in der Länge eingestellt gezeigt ist. Die Ausschnitte 38 des Dübels 30 können für unterschiedliche Bereichslösungen unterschiedliche Längen haben.

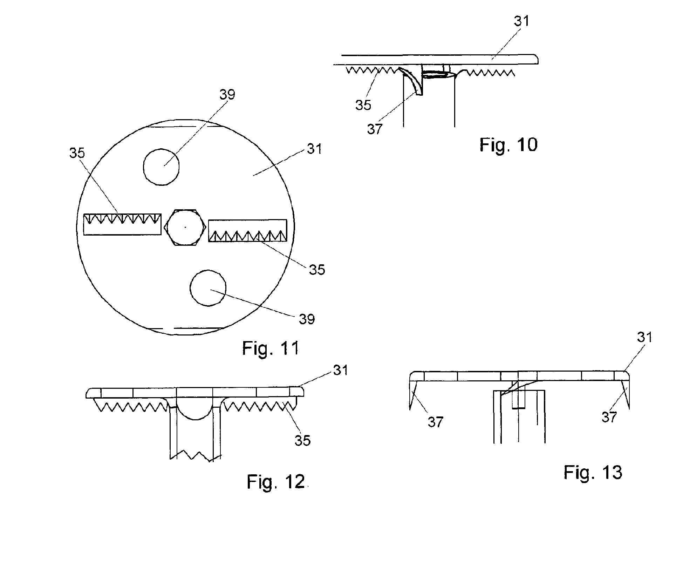

Gemäß den Fig. 10-13 hat der Kopf 31 des Dübels 30 Frässchneiden 35, die so angeordnet sind, dass der Dübel 30 in der Lage ist, sich selbst zu versenken, wenn er gedreht wird. Darüber hinaus hat der Kopf 31 des Dübels 30 seitliche Messer 37, die den Schneidbereich rund machen. Die Frässchneiden 35 versenken den Dübel 30 in der Isolation 16, wenn der Dübel 30 gedreht wird, während die seitlichen Messer 37 ein perfekt rundes Senkloch in der Isolation 16 herstellen.

Ferner umfassen die Befestigungsmittel eine Vielzahl von Kunststoffschrauben 40, von denen jede benutzt wird, um das Stahlnetz 20 an dem Kopf 31 des Dübels 30 und an der eine hohe Dichte aufweisenden Isolation 16 zu befestigen, wie es in den Fig. 1 und 14 bis 16 gezeigt ist. Die Kunststoffschraube 40 hat eine hohe Gewindesteigung zum Verbessern der Befestigung des Stahinetzes 20 an der eine hohe Dichte aufweisenden Isolation 16. Diese Lösung hat hohe Ausziehwerte, welche die Anzahl der Befestiger in einer Putzlösung reduzieren können. Der Kopf 31 des Kunststoffdübels 30 hat Löcher 39 (Fig. 11) für die Kunststoffschraube 40, welch letztere das Stahlnetz 20 an dem Kopf 31 des Kunststoffdübels 30 befestigt.

Die Kunststoffschrauben 40 können ohne die Kunststoffdübel 30 benutzt werden, um das Stahlnetz 20 an der eine hohe Dichte aufweisenden Isolation 16 zu fixieren, wie es in Fig. 5 gezeigt ist. Die abgewinkelten Teile 28, sorgen für die feste Distanz D zwischen dem Stahlnetz 20 und der Außenseite der Isolation 16. Dadurch wird das Stahlnetz 20 in der Mitte der Putzschicht 18 positioniert, wie es oben dargelegt ist.

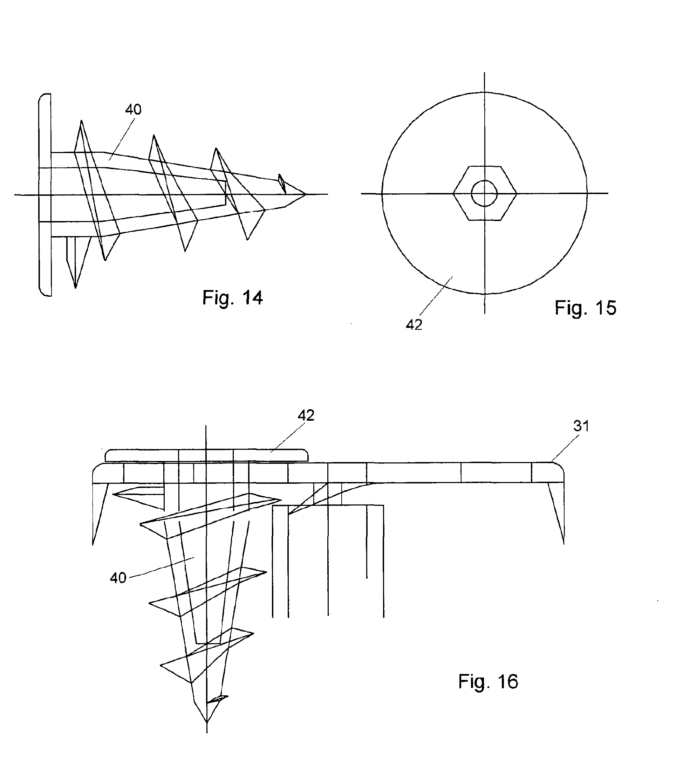

Der Kopf 42 der Kunststoffschraube 40 umfasst ein zentrales Loch für einen Sechseckantrieb, wie es in Fig. 15 gezeigt ist. Der Kopf 31 des Dübels 30 ist mit einem ähnlichen zentralen Loch für einen Sechseckantrieb versehen, wie es in Fig. 11 gezeigt ist.

Das Setzen der Kunststoffschraube 40 bringt Druck auf die Isolation 16 mit den Dübeln 30, welcher an dem Wandsubstrat Reibung erzeugt, damit die lateralen Kräfte aufgenommen werden. Dieselbe Schraube 40 wird auch benutzt, um das Stahlnetz 20 an dem Kopf des Kunststoffdübels 30 zu befestigen, welcher benutzt wird, um die Isolation 16 an dem Wandsubstrat 14 zu befestigen. Diese Lösung zum Befestigen des Stahlnetzes 20 an dem Kopf des Dübels 30 hat hohe Auszugwerte und einen hohen Scherbruchwiderstand.

Die Hauptvorteile des Putzsystems nach der vorliegenden Erfindung sind
- beständig gegen laterale Kräfte mit dem Stahlnetz 20 selbst und den neuen Befestigungsmitteln für das Stahlnetz
- versenkter Kopf 31 des Kunststoffdübels 30
- eingebaute Distanz D des Stahlnetzes 20 zu der Isolation 16
- einstellbare Dübellänge.

### Bezugszeichenliste

- 10: Putzsystem
- 12: Dachkonstruktion
- 14: Wand
- 16: Isolation
- 18: Putzschicht
- 20: Stahlnetz
- 22: kammförmiger Befestiger
- 23: Zinken
- 24: schraubenförmiger Befestiger
- 26: Strebe
- 28: abgewinkelter Teil
- 30: Kunststoffdübel
- 31: Kopf
- 32: Metallschraube
- 33: Kompressionsbereich
- 34: Expansionsbereich
- 35: Frässchneide
- 36: Nut
- 37: seitliches Messer
- 38: Ausschnitt
- 39: Loch
- 40: Kunststoffschraube
- 42: Kopf
- D: Distanz

## Patentansprüche

1. Putzsystem für eine Fassade eines Gebäudes,
mit einem Stahlnetz (20) zum Verstärken einer Putzschicht (18) und mit Befestigungsmitteln (22, 24, 30, 40) zum Befestigen des Stahlnetzes (20) an der Fassade,
wobei die Befestigungsmittel einen an der Unterseite einer Dachkonstruktion (12) und/oder auf der oberen Seite einer Wand der Gebäudekonstruktion zu befestigenden, kammförmigen Befestiger (22) zum Fixieren des Stahlnetzes (20) vor der Wand in einer hängenden Position umfassen, **gekennzeichnet durch** mehrere Kunststoffdübel- und Metallschraube-Baugruppen, die jeweils einen Kunststoffdübel (30) mit einem Kopf (31) und eine Metallschraube (32) zum Befestigen einer Isolation (16) an der Wand (14) der Gebäudekonstruktion umfassen, wobei der Dübel (30) Ausschnitte (38) hat, so daß der Dübel (30) in der Länge einstellbar ist, und **durch** Kunststoffschrauben (40) zum Befestigen des Stahlnetzes (20) an dem Kopf (31) des Kunststoffdübels (30) und/oder an einer eine hohe Dichte aufweisenden Isolation (16).

2. Putzsystem nach Anspruch 1,
**dadurch gekennzeichnet, dass** das Stahlnetz (20) so modifiziert ist, dass es abgewinkelte Teile (28) aufweist, die eine Distanz (D) zwischen dem Stahlnetz (20) und einer die Putzschicht (18) tragenden Isolation (16) erzeugen.

3. Putzsystem nach einem der vorhergehenden Ansprüche,
**dadurch gekennzeichnet, dass** die Ausschnitte (38) des Dübels (30) für verschiedene Bereichslösungen verschiedene Längen haben können.

4. Putzsystem nach einem der vorhergehenden Ansprüche,
**dadurch gekennzeichnet, dass** der Kopf (31) des Dübels (30) Frässchneiden (35) hat, die so angeordnet sind, dass der Dübel (30) in der Lage ist, sich selbst zu versenken, wenn er gedreht wird.

5. Putzsystem nach Anspruch 4,
**dadurch gekennzeichnet, dass** der Kopf (31) des Dübels (30) seitliche Messer (37) hat, die den Schneidbereich rund machen.

## Claims

1. Plastering system for a façade of a building, comprising a steel mesh (20) for reinforcing a plaster layer (18) and fastening means (22, 24, 30, 40) for fastening the steel mesh (20) to the façade, the fastening means having a comb-shaped fastener (22) to be fastened to the underside of a roof structure (12) and/or on the upper side of a wall of a building structure for fixing the steel mesh (20) in a suspended position in front of the wall, **characterised by** a plurality of plastics-dowel and metal-screw assemblies, which each comprise a plastics dowel (30), having a head (31), and a metal screw (32) for fastening insulation (16) to the wall (14) of the building structure, the dowel (30) having cutouts (38) to allow the length of the dowel (30) to be adjusted, and by plastics screws (40) for fastening the steel mesh (20) to the head (31) of the plastics dowel (30) and/or to high-density insulation (16).

2. Plastering system according to claim 1, **characterised in that** the steel mesh (20) is modified such that it comprises angular parts (28) which create a distance (D) between the steel mesh (20) and insulation (16) supporting the plaster layer (18).

3. Plastering system according to any of the preceding claims, **characterised in that** the cutouts (38) of the dowel (30) can have different lengths for different regional solutions.

4. Plastering system according to any of the preceding claims, **characterised in that** the head (31) of the dowel (30) has milling edges (35) which are arranged such that the dowel (30) can countersink itself when rotated.

5. Plastering system according to claim 4, **characterised in that** the head (31) of the dowel (30) has lateral blades (37) which round off the cutting region.

## Revendications

1. Système d'enduit pour une façade de bâtiment comportant un treillis en acier (20) permettant de renforcer une couche d'enduit (18) et des moyens de fixation (22, 24, 30, 40) permettant de fixer ce treillis en acier (20) sur la façade, ces moyens de fixation comportant un élément de fixation (22) en forme de peigne destiné à être fixé sur la face inférieure d'une construction de toit (12) et/ou sur la face supérieure d'une paroi de la construction du bâtiment pour permettre de fixer le treillis en acier (20) en avant de la paroi, dans une position suspendue,
**caractérisé par**
plusieurs groupes de chevilles en matériau synthétique et des vis métalliques qui renferment chacun une cheville en matériau synthétique (30) munie d'une tête (31) et une vis métallique (32) pour permettre la fixation d'une isolation (16) sur la paroi (14) de la construction du bâtiment, la cheville (30) comportant des découpes (38) de sorte que sa longueur puisse être réglée, et par des vis en matériau synthétique (40) pour permettre de fixer le treillis en acier (20) sur la tête (31) de la cheville en matériau synthétique (30) et/ou sur une isolation (16) présentant une grande épaisseur.

2. Système d'enduit conforme à la revendication 1,
**caractérisé en ce que**
le treillis en acier (20) est modifié de sorte qu'il comporte des parties coudées (28) permettant d'obtenir une distance (D) entre ce treillis d'acier (20) et une isolation (16) portant la couche d'enduit (18).

3. Système d'enduit conforme à l'une des revendications précédentes,
**caractérisé en ce que**
les découpes (38) de la cheville (30) peuvent avoir des longueurs différentes pour différentes solutions locales.

4. Système d'enduit conforme à l'une des revendications précédentes,
**caractérisé en ce que**
la tête (31) de la cheville (30) comporte des tranchants fraisés (35) qui sont positionnés de sorte que la cheville (30) puisse s'enfoncer par elle-même lorsqu'elle est déplacée en rotation.

5. Système d'enduit conforme à la revendication 4,
**caractérisé en ce que**
la tête (31) de la cheville (30) comporte des lames latérales (37) susceptibles d'arrondir la zone tranchante.
